# EUROPEAN PATENT APPLICATION

(11) **EP 3 958 567 A1**
(43) Date of publication of application: **23.02.2022**
(21) Application number: 19926024.1
(22) Date of filing: 23.04.2019
(51) Int. Cl.: H04N 19/176

(54) **IMAGE DECODING METHOD, DECODER AND STORAGE MEDIUM**

(71) Applicant: GUANGDONG OPPO MOBILE TELECOMMUNICATIONS CORP., LTD., Wusha, Chang'an Dongguan Guangdong 523860 (CN)
(72) Inventor: MA, Yanzhuo, Dongguan, Guangdong 523860 (CN); HUO, Junyan, Dongguan, Guangdong 523860 (CN); GAO, Qiang, Dongguan, Guangdong 523860 (CN); YANG, Fuzheng, Dongguan, Guangdong 523860 (CN); WAN, Shuai, Dongguan, Guangdong 523860 (CN)
(74) Representative: Taor, Simon Edward William
(86) International application number: PCT/CN2019/083939
(87) International publication number: WO 2020/215216

(57) **Abstract**

Disclosed in the embodiments of the present application are an image decoding method, a decoder and a storage medium. The image decoding method comprises: receiving code stream data, and parsing the code stream data to obtain a coding tree unit corresponding to the code stream data; detecting an ith node of an ith layer corresponding to the coding tree unit to obtain an ith detection result, i being an integer greater than 0; acquiring, according to the ith detection result, a (i+1)th node of a (i+1)th layer corresponding to the coding tree unit; continuing to detect the (i+1)th node, and traversing all the nodes corresponding to the coding tree unit until all the coding unit data corresponding to the coding tree unit is obtained; and generating a decoded image corresponding to the code stream data according to all the nodes and all the coding unit data.

## Description

### Technical Field

Embodiments of the present application relate to the field of video encoding and decoding technologies, in particular to a picture decoding method, a decoder, and a storage medium.

### Background

At present, in a technical solution of video encoding, a split technology is mainly used to partition a spatial region of a picture into non-overlapping small blocks as basic units of coding, which are then coded. Multi-type-tree (MTT) commonly used is evolved step by step from Quadtree (QT) to Quad-Tree-Binary-Tree (QTBT) and further combined with Ternary tree (TT). Therefore, a difference among QT, QTBT, and MTT is only that partitioning modes are different when picture splitting is performed, but partitioning principles of the three are the same.

In order to obtain a better coding effect, each frame of picture often needs to be finely split in video encoding. At the same time, due to a fixed partitioning solution in a current video encoding technology, small split will lead to production of more header information and repeated information representation, thus reducing a coding efficiency.

### Summary

Embodiments of the present application provide a picture decoding method, a decoder, and a storage medium, which can avoid too small block partitioning and effectively reduce an amount of header information, thereby improving a coding efficiency.

Technical solutions of the embodiments of the present application are implemented as follows.

A picture decoding method includes: receiving bitstream data and parsing the bitstream data to obtain a coding tree unit corresponding to the bitstream data; performing a data detection processing on an i-th node of an i-th layer corresponding to the coding tree unit to obtain an i-th detection result, i being an integer greater than 0; acquiring an (i+1)-th node of an (i+1)-th layer corresponding to the coding tree unit according to the i-th detection result; continuing to perform a data detection processing on the (i+1)-th node, and traversing all nodes corresponding to the coding tree unit until data of all coding units corresponding to the coding tree unit is obtained; and generating a decoding picture corresponding to the bitstream data according to all the nodes and the data of all the coding units.

Embodiments of the present application provide a picture decoding method, a decoder, and a storage medium. The decoder receives bitstream data and parsing the bitstream data to obtain a coding tree unit corresponding to the bitstream data; detects an i-th node of an i-th layer corresponding to the coding tree unit to obtain an i-th detection result, i being an integer greater than 0; acquires an (i+1)-th node of an (i+1)-th layer corresponding to the coding tree unit according to the i-th detection result; continues to detect the (i+1)-th node, and traversing all nodes corresponding to the coding tree unit until data of all coding units corresponding to the coding tree unit is obtained; and generates a decoding picture corresponding to the bitstream data according to all the nodes and the data of all the coding units. As can be seen, in the embodiments of the present application, in a process of decoding a picture in a video, after receiving and parsing bitstream data to obtain a coding tree unit, a node of each layer corresponding to the coding tree unit may be performed a detection processing of data detection, and then a node on which there is data is performed a decoding processing to obtain all coding units corresponding to the coding tree unit, so as to obtain a corresponding decoding picture. Since overlapping partitioning between coding units is supported during encoding, if there are at least two coding units with an overlapping region in all coding units obtained by decoding a node on which there is data, a decoder may refresh picture information corresponding to a background coding unit according to picture information corresponding to a refreshing coding unit, thus avoiding excessive partitioning of a video picture, reducing unnecessary header information, avoiding scattered and repeated representation of data with similar characteristics in a same region, and further improving a coding efficiency.

### Brief Description of Drawings

FIG. 1 is a schematic diagram I of splitting using a QT technology.
FIG. 2 is a schematic diagram II of splitting using a QT technology.
FIG. 3 is a schematic diagram of over-splitting.
FIG. 4 is a schematic diagram of a structure of a video encoding system.
FIG. 5 is a schematic diagram of a structure of a video decoding system.
FIG. 6 is a schematic flowchart of implementation of a picture decoding method according to an embodiment of the present application.
FIG. 7 is a schematic diagram of a structure of a coding tree unit according to the prior art.
FIG. 8 is a schematic diagram of a structure of a coding tree unit according to an embodiment of the present application.
FIG. 9 is a schematic flowchart I of a picture decoding method according to an embodiment of the present application.
FIG. 10 is a schematic flowchart II of a picture decoding method according to an embodiment of the present application.
FIG. 11 is a schematic diagram I of a splitting processing.
FIG. 12 is a schematic diagram II of a splitting processing.
FIG. 13 is a schematic diagram III of a splitting processing.
FIG. 14 is a schematic diagram IV of a splitting processing.
FIG. 15 is a schematic diagram V of a splitting processing.
FIG. 16 is a schematic diagram VI of a splitting processing.
FIG. 17 is a schematic diagram of a picture encoding method according to an embodiment of the present application.
FIG. 18 is a schematic diagram I of non-overlapping partitioning.
FIG. 19 is a schematic diagram II of non-overlapping partitioning.
FIG. 20 is a schematic diagram I of overlapping partitioning.
FIG. 21 is a schematic diagram II of overlapping partitioning.
FIG. 22 is a schematic diagram I of a structure of a decoder according to an embodiment of the present application.
FIG. 23 is a schematic diagram II of a structure of a decoder according to an embodiment of the present application.

### Detailed Description

Technical solutions in the embodiments of the present application will be clearly and completely described below in conjunction with the drawings in the embodiments of the present application. It may be understood that specific embodiments described herein are only intended to explain a relevant application, not limit the present application. In addition, it should also be noted that for convenience of description, only parts related to the relevant application are shown in the drawings.

Encoding a video is to encode pictures frame by frame. Similarly, decoding video bitstream after a video is encoded and compressed is to decode bitstream of pictures frame by frame. In almost all international standards for encoding a video picture, when encoding a frame of picture, the frame of picture needs to be partitioned into a quantity of sub-pictures of M×M pixels, which are called Coding Units (CUs), and using a CU as a basic coding unit, the sub-pictures are encoded one by one. A commonly used size of M is 4, 8, 16, 32, and 64. Therefore, encoding a video picture sequence is to encode each coding unit, i.e., each CU of each frame of picture in turn, and decoding bitstream of a video picture sequence is also to decode each CU of each frame of picture in turn, finally reconstructing a whole video picture sequence.

In order to adapt to different picture contents and properties of each portion in a frame of picture, the most effective coding may be carried out in a targeted manner. Sizes of CUs in the frame of picture may be different, some are 8x8, some are 64×64, and so on. In order to make CUs of different sizes seamlessly spliced together, a frame of picture is usually first partitioned into Largest Coding Units (LCUs) or Coding Tree Units (CTUs) with the same size of N×N pixels, and then each LCU is further partitioned into a plurality of CUs of not necessarily the same size. For example, a frame of picture is first partitioned into LCUs of exactly the same size with 64×64 pixels, that is, N = 64, wherein one LCU is composed of three CUs with 32×32 pixels and four CUs with 16×16 pixels, while the other LCU is composed of two CUs with 32×32 pixels, three CUs with 16×16 pixels, and 20 CUs with 8×8 pixels. A CU may be further partitioned into several sub-regions. A sub-region includes, but is not limited to, a Prediction unit (PU) and a Transform unit (TU). To sum up, a coding block or a decoding block refers to a region in a frame of picture that is encoded or decoded.

A CU is a region composed of several pixel values. A shape of the CU may be rectangular, and various CUs may have different shapes and sizes in one frame of picture.

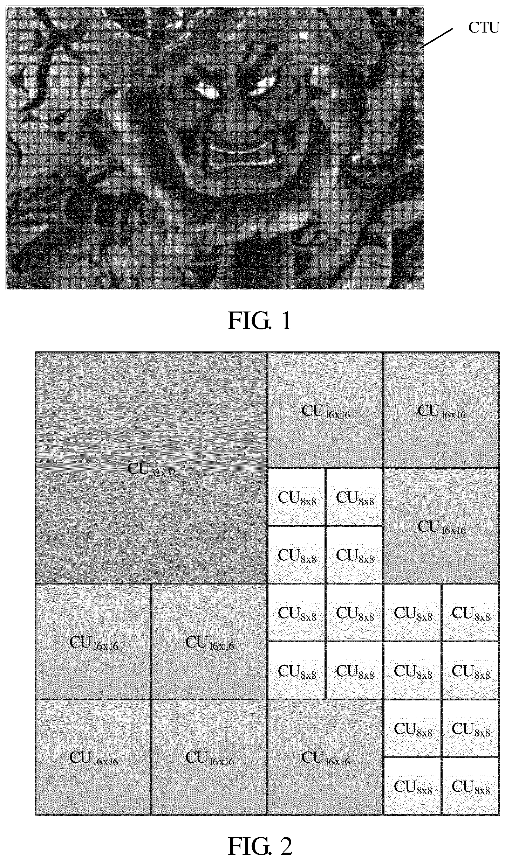

In H.265/High Efficiency Video Coding (HEVC), a QT technology may be used to split coding units or coding blocks without overlapping each other. FIG. 1 is a schematic diagram I of splitting using a QT technology. As shown in FIG. 1, a frame of picture is firstly split into a plurality of regions of the same size according to rows and columns, each region is called a CTU, wherein a side length of a CTU may be 128 pixels, 64 pixels, etc. Since the partitioning is rigid in horizontal and vertical directions, there is no overlap between CTUs. FIG. 2 is a schematic diagram II of splitting using a QT technology. As shown in FIG. 2, within a CTU, it is recursively partitioned into a plurality of CUs in a QT manner, and sizes of the plurality of CUs are not exactly the same. There are CUs with 8×8 pixels, CUs with 16×16 pixels, and CUs with 32×32 pixels. There is no overlapping region between every two CUs, and they are all leaf nodes of quadtree splitting. Similarly, because of rigid splitting in horizontal and vertical directions, there is no overlap between CUs split by any CTU.

A BinaryTree (BT) is supplemented to an existing video encoding technology of H.266/Versatile Video Coding (VVC) on a basis of QT to form a QTBT split technology, and further a TT partitioning solution is supplemented to form a MTT. Various partitioning methods in the MTT, such as QT partitioning, vertical BT partitioning, horizontal BT partitioning, vertical center-both sides TT partitioning, horizontal center-both sides TT partitioning, etc., are all used on various layers in a CTU.

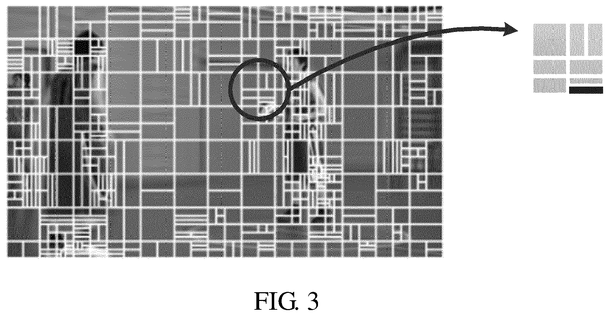

It may be seen that a current MTT solution is evolved step by step from a QT to a QTBT, and then combined with a TT. A difference among them is only in splitting modes, but partitioning principles of the three are the same and there is no overlap between CUs. That is to say, since no overlapping region is allowed between CUS for all the current partitioning solutions, a fixed splitting mode requires fine splitting at irregular edges of objects to obtain a better video encoding effect. On the other hand, small and fragmented splitting brings more header information, which will reduce a coding efficiency. With diversification of splitting modes, some problems of small and fragmented splitting are partially solved, but a problem of over-splitting still exists. FIG. 3 is a schematic diagram of over-splitting. As shown in FIG. 3, after a region on an upper edge of a ball held by a right player is partitioned and enlarged, it may be seen that most of the region is a similar flat background region, and only a top of the ball is a content of a block that is different from other regions. In order to partition a corresponding region, a final splitting result is very small and fragmented. It may be seen that for an existing encoding and decoding technology, each frame of picture often needs to be split finely in video encoding to obtain a better coding effect. However, small splitting will lead to production of more header information and repeated information representation, thus reducing a coding efficiency.

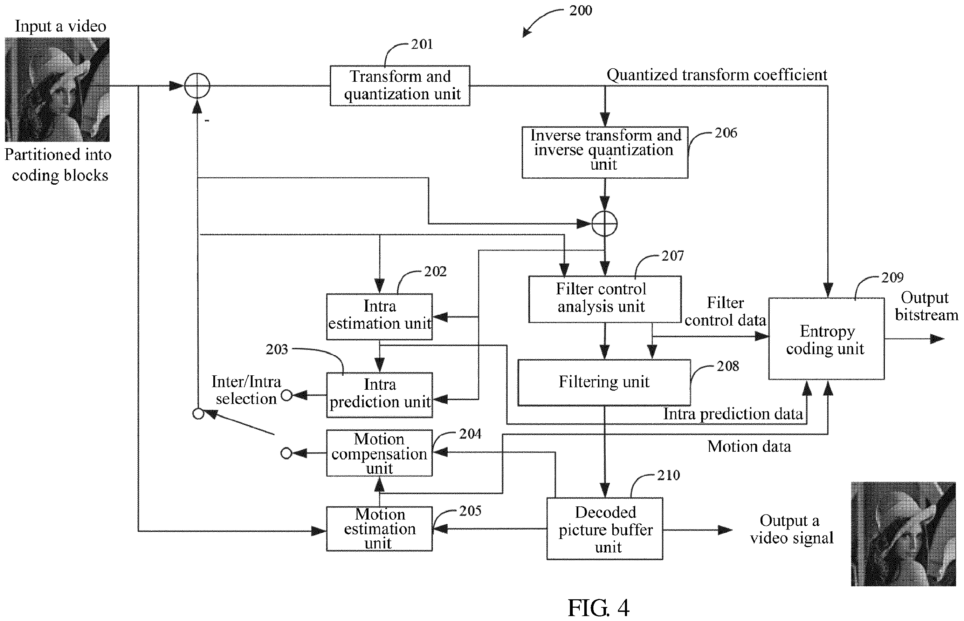

An embodiment of the present application provides a picture decoding method, which can avoid too small block partitioning of a picture, effectively reduce an amount of header information, and avoid repeated information representation, thus improving a coding efficiency. An encoding method may be applied to block splitting and a combination part of intra and inter prediction signals in a video encoding hybrid framework, and specifically, the decoding method may also be applied to a buffer part in the video encoding hybrid framework. For example, FIG. 4 is a schematic diagram of a structure of a video encoding system. As shown in FIG. 4, the video encoding system 200 includes: a transform and quantization unit 201, an intra estimation unit 202, an intra prediction unit 203, a motion compensation unit 204, a motion estimation unit 205, an inverse transform and inverse quantization unit 206, a filter control analysis unit 207, a filtering unit 208, an entropy coding unit 209, and a decoded picture buffer unit 210. The filtering unit 208 may implement deblocking filtering and Sample Adaptive Offset (SAO) filtering, and the entropy coding unit 209 may implement header information coding and Context-based Adaptive Binary Arithmatic Coding (CABAC).

When it is detected that an original video signal is received, a video coding block may be obtained by partitioning of a coding tree unit, and then residual pixel information obtained after intra or inter prediction is transformed by the transform and quantization unit 201 for the video coding block, including transforming residual information from a pixel domain to a transform domain, and quantizing an obtained transform coefficient to further reduce a bit rate. The intra estimation unit 202 and the intra prediction unit 203 are configured to perform intra prediction on the video coding block. Specifically, the intra estimation unit 202 and the intra prediction unit 203 are configured to determine an intra prediction mode to be used for encoding the video coding block. The motion compensation unit 204 and the motion estimation unit 205 are configured to perform inter prediction coding of a received video coding block relative to one or more blocks in one or more reference frames to provide temporal prediction information. Motion estimation performed by the motion estimation unit 205 is a process of generating a motion vector, through which motion of the video coding block may be estimated, and then the motion compensation unit 204 performs motion compensation based on the motion vector determined by the motion estimation unit 205. After determining the intra prediction mode, the intra prediction unit 203 is also configured to provide selected intra prediction data to the entropy coding unit 209, and the motion estimation unit 205 also sends calculated and determined motion vector data to the entropy coding unit 209. In addition, the inverse transform and inverse quantization unit 206 is configured to reconstruct the video coding block, and reconstruct a residual block in the pixel domain. Blocking artifacts are removed from the reconstructed residual block through the filter control analysis unit 207 and the filtering unit 208, and then the reconstructed residual block is added to a predictive block in a frame of the decoded picture buffer unit 210 to generate a reconstructed video coding block. The entropy coding unit 209 is configured to encode various coding parameters and quantized transform coefficients. In a coding algorithm based on the CABAC, context contents may be based on adjacent coding blocks, and may be used for encoding information indicating the determined intra prediction mode and outputting bitstream of a video signal. The decoded picture buffer unit 210 is configured to store the reconstructed video coding block for prediction reference. As video picture encoding progresses, new reconstructed video coding blocks will be generated continuously, and these reconstructed video coding blocks will be stored in the decoded picture buffer unit 210.

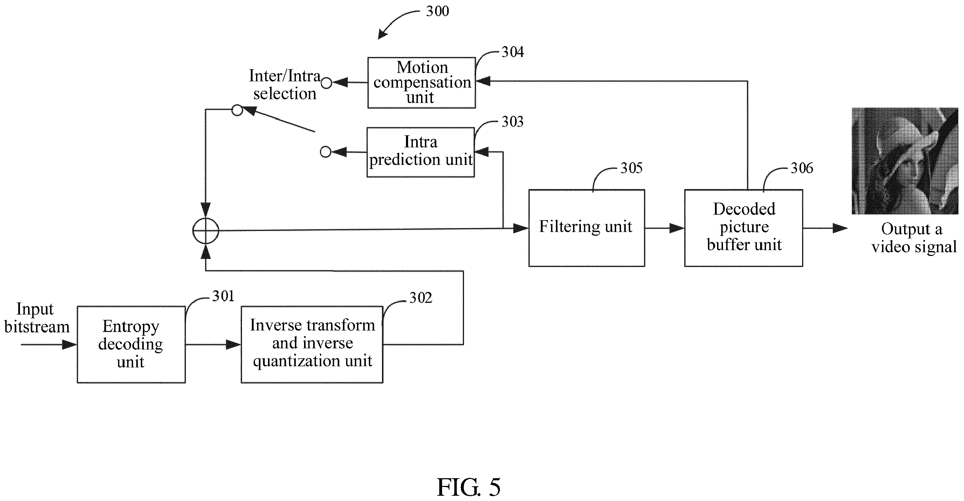

FIG. 5 is a schematic diagram of a structure of a video decoding system. As shown in FIG. 5, the video decoding system 300 includes an entropy decoding unit 301, an inverse transform and inverse quantization unit 302, an intra prediction unit 303, a motion compensation unit 304, a filtering unit 305, and a decoded picture buffer unit 306. The entropy decoding unit 301 may implement header information decoding and CABAC decoding, and the filtering unit 305 may implement deblocking filtering and SAO filtering. After an input video signal undergoes a coding processing of FIG. 4, bitstream of the video signal is output. The bitstream is input into the video decoding system 300, and first passes through the entropy decoding unit 301 to obtain a decoded transform coefficient. The transform coefficient is processed by the inverse transform and inverse quantization unit 302 to generate a residual block in a pixel domain. The intra prediction unit 303 may be configured to generate prediction data of a current block based on a determined intra prediction mode and data of a previous block from a current frame or picture. The motion compensation unit 304 determines prediction information for the video decoding block by parsing a motion vector and other associated syntax elements, and uses the prediction information to generate a predictive block of the video decoding block being decoded. A video block that has been decoded is formed by summing the residual block from the inverse transform and inverse quantization unit 302 with a corresponding predictive block generated by the intra prediction unit 303 or the motion compensation unit 304. The decoded video signal passes through the filtering unit 305 to remove blocking artifacts, which may improve video quality. Then the video block that has been decoded is stored in the decoded picture buffer unit 306. The decoded picture buffer unit 306 stores a reference picture used for subsequent intra prediction or motion compensation, and is also configured to output a video signal, thus obtaining a restored original video signal.

The picture decoding method according to the present application may be applied to encoding and decoding frameworks of FIGs. 4 and 5, which is not limited specifically in the embodiments of the present application.

Technical solutions in the embodiments of the present application will be clearly and completely described below in conjunction with the drawings in the embodiments of the present application.

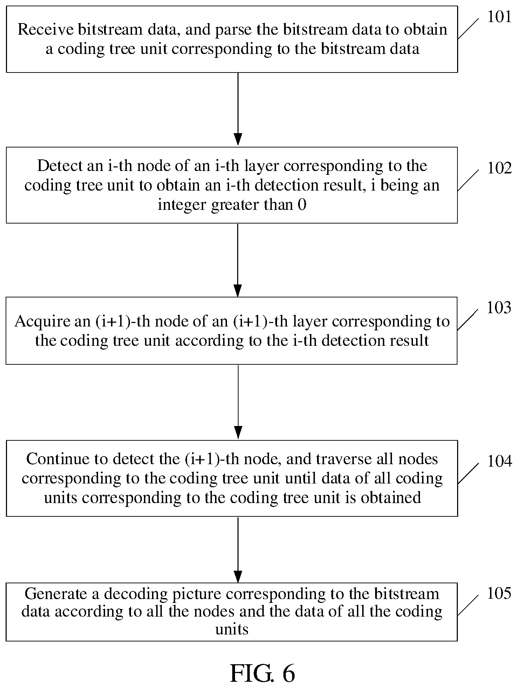

In an embodiment of the present application, FIG. 6 is a schematic flowchart of implementation of a picture decoding method according to an embodiment of the present application. As shown in FIG. 6, in the embodiment of the present application, the picture decoding method performed by a decoder may include the following acts.

In act 101, bitstream data is received, and the bitstream data is parsed to obtain a coding tree unit corresponding to the bitstream data.

In an embodiment of the present application, the decoder may receive bitstream data, and then parse the received bitstream data to obtain a coding tree unit corresponding to the bitstream data. The decoder may obtain at least one coding tree unit with the same size after parsing the bitstream data.

It should be noted that in the embodiment of the present application, when an encoder encodes a video, a plurality of frames of pictures in a video are encoded frame by frame. At any moment, a frame of picture being encoded may be called a current coding picture. When encoding the current coding picture in the video, the encoder needs to partition the current coding picture into coding tree units of exactly the same size, and then further partition a coding tree unit into coding units of not necessarily the same size for encoding. For example, the encoder may partition the current coding picture to obtain coding tree units of exactly the same size with 64×64 pixels, that is, to obtain coding tree units composed of 64×64 pixel points. In the embodiment of the present application, when the encoder performs overlapping partitioning on the current coding picture, overlap is allowed between coding units, and there is no overlap between coding tree units for requirements of parallel processing and reducing coding complexity.

It should be noted that, in the embodiment of the present application, the encoder may perform overlapping partitioning and encode the current coding picture through the multi-type-tree (MTT), and then obtain bitstream data corresponding to the current coding picture. The decoder may decode the current coding picture according to the bitstream data to obtain a coding tree unit, and then further obtain a coding unit.

Further, in an embodiment of the present application, when the decoder decodes a video, bitstream data of a plurality of frames of pictures in the video are decoded frame by frame. At any moment, a frame of picture being decoded may be called a current decoding picture.

It should be noted that in the embodiment of the present application, when the decoder decodes the current decoding picture, there is no overlap between coding tree units, but overlap is allowed between coding units. That is to say, in the embodiment of the present application, when the decoder decodes, at a position of a reconstructed frame buffer, there will be a plurality of coding units carrying decoded pixel data of a same region simultaneously, among which one coding unit is larger and may be regarded as a background coding unit, and another coding unit is smaller and may be regarded as a refreshing coding unit. The reconstructed data decoded through the background coding unit may be covered by pixel data at this position carried by the refreshing coding unit, that is, a refresh process. In the present application, a decoding mode in which a background coding unit is refreshed with a refreshing coding unit is a refreshing decoding mode.

Further, in an embodiment of the present application, when the decoder performs video decoding, a refreshing decoding mode for refreshing a coding unit may be selected to start. Specifically, the decoder may be provided with a high-layer control syntax, and an enable switch syntax PPSRfrsEnbl or SPSRfrsEnbl may be used in PPS or SPS to indicate whether the refreshing decoding mode is currently supported.

That is to say, in implementation of the present application, after the decoder receives bitstream data and parses the bitstream data to obtain the coding tree unit corresponding to the bitstream data, that is, after the act 101, a preset refresh mode may be started. Specifically, the preset refresh mode may be used for overlapping decoding between coding units.

In act 102, a detection processing is performed on an i-th node of an i-th layer corresponding to the coding tree unit to obtain an i-th detection result, i being an integer greater than 0.

In an embodiment of the present application, the decoder may first performing the detection processing on the ith node of the i-th layer corresponding to the coding tree unit to determine whether there is data and whether splitting may be further performed on the i-th node, so as to obtain a detection result corresponding to the i-th node, i.e., the i-th detection result. Specifically, i is an integer greater than or equal to 0, for example, i may be 1, 2, 3, etc.

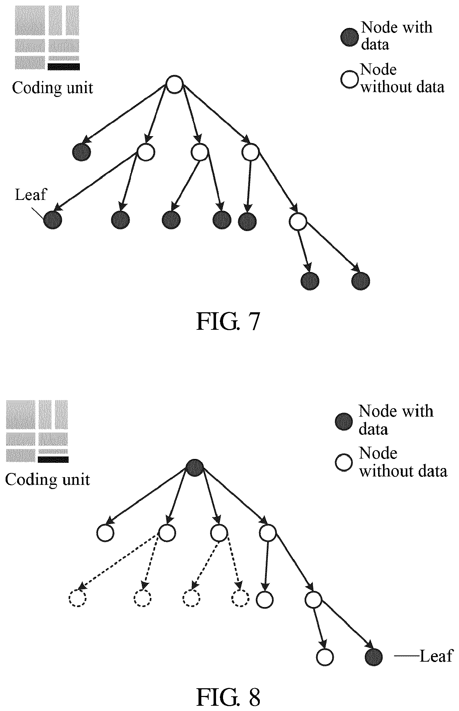

It should be noted that in the embodiment of the present application, a coding tree unit may correspond to at least one layer of nodes, and there may be data at any node in each layer. Data of an ancestor node may be covered by data of its descendant nodes. Therefore, when decoding the coding tree unit, the decoder needs to detect whether there is data on a node layer by layer, so as to further decode a node at which there is data to construct a corresponding coding unit. In contrast, in the prior art, for a coding tree unit, data only exists on a node on which splitting cannot be further performed in a tree structure, that is, on a leaf. Therefore, the decoder needs to parse and decode each leaf. FIG. 7 is a schematic diagram of a structure of a coding tree unit according to the prior art. FIG. 8 is a schematic diagram of a structure of a coding tree unit according to an embodiment of the present application. As shown in FIGs. 7 and 8, for a same coding tree unit, since overlapping partitioning cannot be performed on coding units in the prior art, data only exists on a leaf in a tree structure corresponding to a coding tree unit, and when decoding, the decoder needs to parse all leaves to construct coding units. In the embodiment of the present application, overlapping partitioning may be performed on coding units. Therefore, data may exist at any intermediate node in a tree structure corresponding to a coding tree unit. For any coding tree unit, whether data exists at each node may be detected. If data exists, decoding is performed to obtain a corresponding coding unit, without need of parsing data for all leaves, thus avoiding a large number of small block partitioning and improving a decoding efficiency. Further, in an embodiment of the present application, when the encoder performs picture encoding, not only a leaf node is used as a coding unit, but also an intermediate node may be compressed and encoded. However, part of node information of a descendant node needs to be removed from the intermediate node, for example, through masking and in a way of zero-filling, interpolation, or external expansion and supplementation. Compared with FIG. 8, the encoder in FIG. 7 encodes by concentrating a plurality of irregular regions in one region, which may reduce a fragmentation degree of coding splitting. A region originally different from background is temporarily regarded as the same as other background regions through data expansion, so as to reduce a quantity of bits used for representation. However, blocks different from the background need to be coded separately and refreshed to cover background blocks to obtain a same picture content as an original one. Therefore, some splits in an original split tree will no longer need to be partitioned, reducing part of header information. Moreover, since a flat picture region is dominated by low-frequency components, and a corresponding energy is all concentrated in an upper left corner of the region, reduction of partitioning is more conducive to concentration of an energy, and compared with over-splitting, part of frequency domain data after pixel domain conversion will be saved. Specifically, there is no valid data in a dashed portion of a split tree in FIG. 8. Therefore, partitioning information of this portion may be omitted.

Furthermore, in an embodiment of the present application, there may be at least one tree node in data of an i-th layer corresponding to a coding tree unit. Therefore, the i-th nodes of the i-th layer corresponding to the coding tree unit are all nodes of the i-th layer, that is, the decoder may detect all the i-th nodes of the i-th layer corresponding to the coding tree unit to obtain a detection result corresponding to each of the i-th nodes, that is, all detection results corresponding to all nodes of the i-th layer are obtained through detection.

It should be noted that, in the embodiment of the present application, in order to determine whether there is data and whether splitting may be further performed on the i-th node, the decoder detect the i-th node. Accordingly, an i-th detection result may include four types: there is data and splitting is performed, there is no data and splitting is performed, there is data and splitting is not performed, and there is no data and splitting is not performed.

In act 103, an (i+1)-th node of an (i+1)-th layer corresponding to the coding tree unit is acquired according to the i-th detection result.

In an embodiment of the present application, the decoder may obtain the (i+1)-th node of the (i+1)-th layer corresponding to the coding tree unit according to the i-th detection result after detecting the i-th node of the i-th layer corresponding to the coding tree unit and acquiring the i-th detection result.

It should be noted that in the implementation of the present application, after the decoder obtains the i-th detection result by performing a detection processing, the i-th detection result may include four types: there is data and splitting is performed, there is no data and splitting is performed, there is data and splitting is not performed, and there is data and splitting is not performed, therefore, the decoder may further perform a corresponding processing on the i-th node according to different detection results.

Further, in an embodiment of the present application, when the i-th detection result is that there is data and splitting is performed, the decoder may obtain data of an i-th coding unit of the i-th layer, and then perform a splitting processing on the i-th node to obtain the (i+1)-th node of the (i+1)-th layer corresponding to the coding tree unit.

It should be noted that in the implementation of the present application, after the decoder detects the i-th node, if it is determined that there is data and splitting may be further performed on the i-th node, the decoder needs to obtain corresponding data first, that is, obtain data of the i-th coding unit corresponding to the i-th node in the coding tree unit. Since there may be at least one i-th node in the i-th layer corresponding to the coding tree unit, after the decoder performs a detection processing on all i-th nodes of the i-th layer in turn, the decoder may obtain data from an i-th node whose detection result is that there is data, so as to obtain data of the i-th coding unit corresponding to the i-th node. Furthermore, after the decoder obtains data of the corresponding i-th coding unit, splitting may be further performed on the i-th node to obtain a node of a next layer of the i-th layer, that is, the (i+1)-th node of the (i+1)-th layer corresponding to the coding tree unit.

Further, in an embodiment of the present application, when the i-th detection result is that there is no data and splitting is performed, a splitting processing is performed on the i-th node to obtain the (i+1)-th node of the (i+1)-th layer corresponding to the coding tree unit. In an embodiment of the present application, after the decoder performs a detecting processing on the i-th node of the i-th layer corresponding to the coding tree unit to obtain the i-th detection result, if the i-th detection result is that there is no data and splitting is performed, the decoder does not need to obtain data, but directly performs a splitting processing to obtain a node of a next layer, that is, the (i+1)-th node of the (i+1)-th layer.

Furthermore, in an embodiment of the present application, since there may be at least one i-th node in the i-th layer corresponding to the coding tree unit, after performing a detecting processing on all the i-th nodes of the i-th layer in turn, the decoder may perform a detecting processing on an i-th node whose detection result is that splitting may be further performed, to obtain an (i+1)-th node of an (i+1)-th layer corresponding to each i-th node, that is, the decoder may split each of the i-th nodes that may be further split, to obtain at least one (i+1)-th node.

It may be seen that in the embodiment of the present application, as long as an i-th node may be split, the decoder needs to continue to split the i-th node regardless of whether there is data on the i-th node, so as to obtain the (i+1)-th node of the (i+1)-th layer.

Further, in an embodiment of the present application, when the i-th detection result is that there is data and splitting is not performed, data of the i-th coding unit of the i-th layer is obtained, and a parsing processing of the i-th node is ended.

It should be noted that in the implementation of the present application, after the decoder performs a detection processing on the i-th node, if it is determined that there is data on the i-th node and a splitting processing cannot be further performed on the i-th node, the decoder needs to obtain corresponding data first, that is, obtain data of the i-th coding unit corresponding to the i-th node in the coding tree unit. Since there may be at least one i-th node in the i-th layer corresponding to the coding tree unit, the decoder may obtain data from the i-th node whose detection result is that there is data after detecting all i-th nodes of the i-th layer in turn, so as to obtain data of the i-th coding unit corresponding to the i-th node. Furthermore, since the i-th node cannot be further split, the decoder may end the parsing processing of the i-th node after obtaining data of the corresponding i-th coding unit.

Further, in an embodiment of the present application, when the i-th detection result is that there is no data and splitting is not performed, the decoder does not need to obtain data, and at the same time, it does not need to perform a splitting processing, but directly ends the parsing process of the i-th node.

It should be noted that, in the embodiment of the present application, the encoder may determine whether data exists in each rectangular region generated through splitting, and obtain data of a coding unit corresponding to the node if data exists. For example, for an i-th node where data exists, data of an i-th coding unit of the i-th node may be obtained. Further, in the embodiment of the present application, the data of the i-th coding unit may include flag information, prediction information, a transform coefficient, etc. Further, the decoder may obtain corresponding i-th background pixel data according to the data of the i-th coding unit.

In act 104, a detection processing is continued to be performed on the (i+1)-th node, and all nodes corresponding to the coding tree unit is traversed until data of all coding units corresponding to the coding tree unit is obtained.

In an embodiment of the present application, after the decoder performs a splitting processing on the i-th node to obtain the (i+1)-th node of the (i+1)-th layer corresponding to the coding tree unit, the decoder may continue to perform a splitting processing on the (i+1)-th node, and then traverse all nodes corresponding to the coding tree unit, that is, perform a detection processing on all nodes of the coding tree unit until data of all coding units corresponding to the coding tree unit is obtained.

It should be noted that, in the embodiment of the present application, after the decoder obtains the (i+1)-th node of the (i+1)-th layer through splitting, the decoder may continue to perform a detection processing on the (i+1)-th node according to the method of the above acts 101 to 103, so as to obtain an (i+1)-th coding unit corresponding to the (i+1)-th node and an (i+2)-th node of an (i+2)-th layer, and traverse all nodes of the coding tree unit according to the method of the above acts 101 to 103, that is, after a recursive processing according to the method of the above acts 101 to 103, data of all the coding units corresponding to the coding tree unit may be obtained.

Further, in an embodiment of the present application, the decoder may perform a recursive processing on a node of any layer of a coding tree unit according to the method of the above acts 101 to 103, that is, for any node, the decoder may first perform a detection processing, then obtain data from a node on which there is data and splitting is performed to obtain data of a corresponding coding unit, and then continue to perform a splitting processing to obtain a node of a next layer; for a node on which there is no data and splitting is performed, a splitting processing is directly performed to obtain a node of a next layer; data is obtained from a node on which there is data and splitting is not performed, data of a corresponding coding unit is obtained, and a parsing processing is ended; for a node on which there is no data and splitting is not performed, a parsing processing is directly ended. To sum up, the decoder may obtain data of all the coding units corresponding to the coding tree unit after performing a recursive processing on the coding tree unit layer by layer according to the method of the above acts 101 to 103.

In act 105, a decoding picture corresponding to the bitstream data is generated according to all the nodes and the data of all the coding units.

In an embodiment of the present application, after the decoder obtains data of all the coding units corresponding to the coding tree unit, the decoder may generate a decoding picture corresponding to the bitstream data according to all the nodes and the data of all the coding units.

It should be noted that in the embodiment of the present application, when the decoder generates the decoding picture corresponding to the bitstream data according to all the nodes and the data of all the coding units, the decoder may decode data of all the coding units first to obtain all pixel data corresponding to the coding tree unit, and then generate a decoding picture corresponding to the bitstream data according to all the pixel data.

Further, in an implementation of the present application, when the decoder decodes data of all the coding units to obtain all the pixel data corresponding to the coding tree unit, if there is data and splitting is not performed on the i-th node, the decoder may decode data of the i-th coding unit to obtain i-th pixel data; and if there is data and splitting is performed on the i-th node, the decoder decodes data of the i-th coding unit to obtain i-th background pixel data, decodes data of the (i+1)-th coding unit to obtain i-th refreshing pixel data so as to obtain i-th pixel data, and the decoder traverses all the nodes until all the pixel data is obtained.

Further, in an implementation of the present application, when the decoder generates the decoding picture corresponding to the bitstream data according to all the pixel data, if there is data and splitting is performed on the i-th node, the i-th background pixel data is refreshed according to the i-th refreshing pixel data to obtain refreshing pixel data, that is, the i-th pixel data; and all the nodes are continued to be traversed until the decoding picture is obtained.

That is to say, if the i-th node cannot be further split, that is, the i-th node is a leaf node in the coding tree unit, then the i-th pixel data obtained by decoding by the decoder is pixel data corresponding to the i-th coding unit. If the i-th node can be further split, that is, the i-th node is not a leaf node in the coding tree unit, then the decoder needs to obtain pixel data corresponding to the (i+1)-th coding unit of the (i+1)-th node, and then refresh a corresponding region of the pixel data corresponding to the i-th coding unit with the pixel data corresponding to the (i+1)-th coding unit of the (i+1)-th node, to obtain pixel data corresponding to the i-th coding unit.

It should be noted that in the implementation of the present application, when the decoder decodes data of all the coding units to obtain all the pixel data corresponding to the coding tree unit, the decoder may also decode data of a lower layer first and then decode data of an upper layer. Specifically, when the decoder decodes data of all the coding units to obtain all the pixel data corresponding to the coding tree unit, if there is data and splitting is performed on the i-th node, the decoder may obtain data of the (i+1)-th coding unit and decode the data of the (i+1)-th coding unit to obtain the i-th refreshing pixel data corresponding to the i-th node; then decode data of the i-th coding unit to obtain the i-th background pixel data; and then set the i-th background pixel data as a background of the i-th refreshing pixel data to obtain the i-th coding unit. The encoder may continue to traverse all the nodes until all the pixel data is obtained.

It should be noted that in the embodiment of the present application, if the i-th detection result is that there is no data, the i-th background pixel data remains empty.

It should be noted that in the embodiment of the present application, when the decoder generates the decoding picture according to the data of all of the coding units, the decoder may decode the data of all the coding units first to obtain all the pixel data corresponding to the coding tree unit. If there is an overlapping region between background pixel data corresponding to a background coding unit and refreshing pixel data corresponding to a refreshing coding unit in all the pixel data, the decoder may replace pixel data of a corresponding region of the background coding unit according to pixel data of the refreshing coding unit, that is, refresh the background coding unit with the refreshing coding unit.

That is to say, in the embodiment of the present application, when the decoder generates the decoding picture corresponding to the bitstream data according to all the coding units, if there is an overlapping region between pixel data corresponding to a m-th coding unit and pixel data corresponding to an n-th coding unit in all the coding units, the decoder may refresh the pixel data corresponding to the m-th coding unit according to the pixel data corresponding to the n-th coding unit to generate the decoding picture. M is an integer greater than 0 and n is an integer greater than m, that is, the n-th coding unit is a refreshing coding unit of the m-th coding unit.

In the prior art, when an encoder is encoding a video picture, coding units do not overlap with each other, so any small picture information needs to be finely partitioned into small coding units. Accordingly, when a decoder decodes a video picture, coding units obtained by decoding will not have an overlapping region. In contrast, according to the picture decoding method provided in the embodiment of the present application, it is precisely because the encoder supports overlap between coding units during picture encoding, which may avoid fine partitioning of graphics. Accordingly, when the decoder is decoding a video picture, if there is an overlapping region between background pixel data corresponding to a background coding unit and refreshing pixel data corresponding to a refreshing coding unit in all the pixel data, the decoder may replace pixel data of a corresponding region of the background coding unit according to pixel data of the refreshing coding unit, that is, refresh the background coding unit with the refreshing coding unit.

Further, in an embodiment of the present application, in a decoding process, data of the background coding unit, such as prediction information, flag information, and a transform coefficient, may also be refreshed and replaced by data of the refreshing coding unit.

That is to say, in the embodiment of the present application, in the decoding process, the decoder uses current latest data regardless of cached pixel data, prediction information, flag information, a transform coefficient, and etc., wherein the latest data may be pixel data corresponding to the background coding unit of the coding tree unit, which may be data of a background coding unit that has not been refreshed and covered, or data after being replaced by the decoding picture of the refreshing coding unit.

It should be noted that, in the embodiment of the present application, the encoder and the decoder may also allow regions of coding units to overlap during prediction and/or transformation. Accordingly, a coding tree unit may have a corresponding background prediction unit and a refreshing prediction unit, and may also have a corresponding background transform unit and a refreshing transform unit.

Further, in an embodiment of the present application, in the decoding process, the decoder may refresh information for subsequent block prediction in time or not in time.

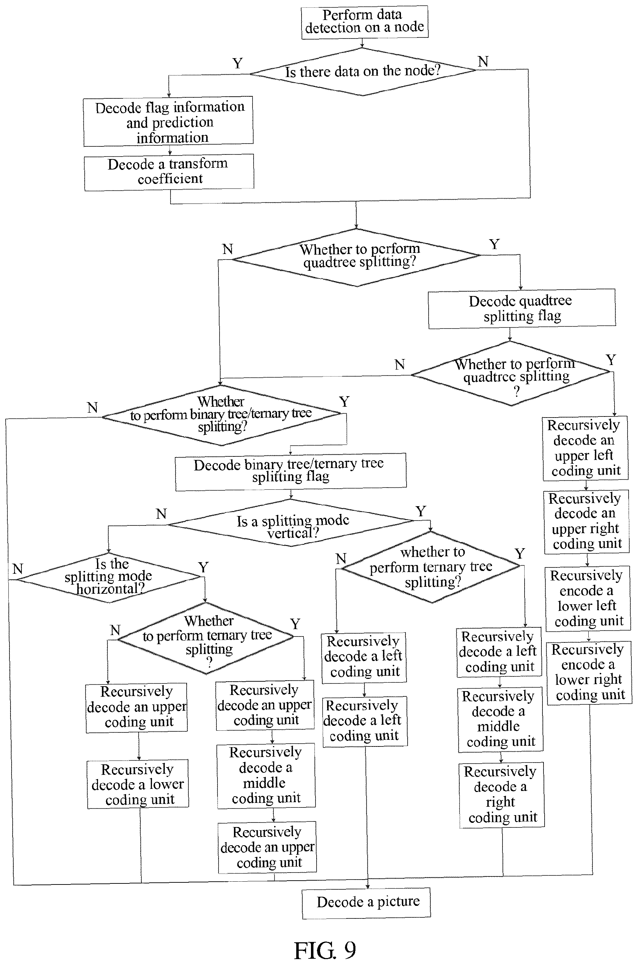

Based on the picture decoding method provided in the above acts 101 to 105, FIG. 9 is a schematic flowchart I of a picture decoding method according to an embodiment of the present application. As shown in FIG. 9, for any node in a coding tree unit that may be further split, a decoder may first detect to determine whether there is data on the node. If a detection result is that there is data, the decoder may obtain data to obtain corresponding flag information, prediction information, and a transform coefficient, so as to obtain a corresponding coding unit through a decoding processing, and then enter a splitting processing flow. If the detection result is that there is no data, the decoder may directly enter the splitting processing flow. In the splitting processing flow, the decoder may first determine whether quadtree splitting can be performed on the node. If it is determined that quadtree splitting cannot be performed on the node, the decoder may continue to determine whether binary tree splitting or ternary tree splitting can be performed on the node. If quadtree splitting can be performed, then after quadtree splitting is performed on the node, the decoder may determine again whether quadtree splitting can be performed for various nodes after splitting; if yes, the various nodes are recursively decoded; if not, the decoder may continue to determine whether binary tree splitting or ternary tree splitting can be performed on various nodes after splitting. When determining binary tree splitting or ternary tree splitting, a splitting direction of binary tree splitting or ternary tree splitting needs to be determined, that is, whether it is vertical splitting or horizontal splitting needs to be determined, and finally split nodes are recursively decoded. Finally, data of all the coding units corresponding to the coding tree unit may be obtained.

Further, in an embodiment of the present application, in the decoding process, the decoder may decode a refreshing coding unit first and then decode a background coding unit refreshed by the refreshing coding unit in a special case, for example, in a case where a position of a refreshing coding unit is at an upper left corner of a background coding unit. That is, in the embodiment of the present application, in a case where data exists on an upper left side corresponding to the coding tree unit, the decoder may recursively decode a coding unit of the upper left side first, and then parse the data. In a case where data exists on a left side corresponding to the coding tree unit, the decoder may recursively decode a coding unit of the left side first, and then parse the data. In a case where data exists on an upper side corresponding to the coding tree unit, the decoder may recursively decode a coding unit of the upper side first, and then parse the data.

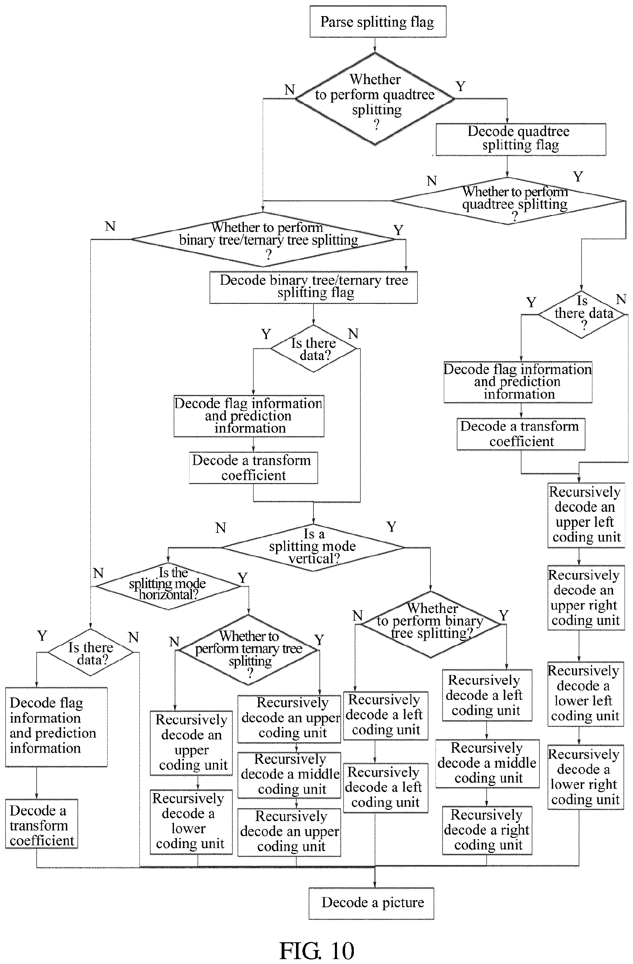

Further, in an embodiment of the present application, when the decoder is decoding a picture, a flow of determining whether there is data on a node may be put on each branch obtained after a splitting flag of the node is parsed, so that a quantity of bits of a transmission signal may be effectively saved. Based on FIG. 9, FIG. 10 is a schematic flowchart II of a picture decoding method according to an embodiment of the present application. As shown in FIG. 10, for any node in a coding tree unit that may be further split, a decoder may first determine whether quadtree splitting can be performed on the node. If it is determined that quadtree splitting cannot be performed on the node, the decoder may continue to determine whether binary tree splitting or ternary tree splitting can be performed on the node. If quadtree splitting can be performed on the node, then after quadtree splitting is performed on the node, the decoder may determine again whether quadtree splitting can be performed on various nodes after splitting; if yes, the various nodes are recursively decoded to obtain a splitting flag of a branch on the node; if not, the decoder may continue to determine whether binary tree splitting or ternary tree splitting can be performed on various nodes after splitting to obtain a splitting flag of a branch on the node. After parsing and obtaining the splitting flag on each branch of the node, the decoder may detect each branch, and then determine whether there is data on the node according to a detection result. If there is data, the decoder may obtain data, obtain corresponding flag information, prediction information, and a transform coefficient, thus obtain a coding unit corresponding to the node, and recursively decode various branches after splitting; and if there is no data, the decoder may directly recursively decode various branches after splitting. Finally, data of all the coding units corresponding to the coding tree unit may be obtained.

An embodiment of the present application provides a picture decoding method, including: receiving, by a decoder, bitstream data, and parsing the bitstream data to obtain a coding tree unit corresponding to the bitstream data; detecting an i-th node of an i-th layer corresponding to the coding tree unit to obtain an i-th detection result, i being an integer greater than 0; acquiring an (i+1)-th node of an (i+1)-th layer corresponding to the coding tree unit according to the i-th detection result; continuing to detect the (i+1)-th node, and traversing all nodes corresponding to the coding tree unit until data of all coding units corresponding to the coding tree unit is obtained; and generating a decoding picture corresponding to the bitstream data according to all nodes and the data of all the coding units. As can be seen, in the embodiment of the present application, in a process of decoding a picture in a video, after receiving bitstream data and parsing it to obtain a coding tree unit, a detection processing may be performed on a node of each layer corresponding to the coding tree unit, and then a decoding processing is performed on a node on which there is data to obtain all coding units corresponding to the coding tree unit, so as to obtain a corresponding decoding picture. Since overlapping partitioning between coding units is supported during encoding, if there are at least two coding units with an overlapping region in all coding units obtained by decoding a node on which there is data, the decoder may refresh picture information corresponding to a background coding unit according to picture information corresponding to a refreshing coding unit, thus avoiding excessive partitioning of a video picture, reducing unnecessary header information, avoiding scattered and repeated representation of data with similar characteristics in a same region, and further improving a coding efficiency.

Based on the above embodiment, the method of splitting the i-th node by the decoder to obtain the (i+1)-th node of the (i+1)-th layer corresponding to the coding tree unit may include the following acts.

In act 201, an i-th splitting mode corresponding to the i-th node is acquired.

In an embodiment of the present application, when the decoder splits the i-th node, it may first obtain the i-th splitting mode corresponding to the i-th node.

It should be noted that, in the embodiment of the present application, the i-th splitting mode may include one of QT, QTBT, TT, and BT. It should be noted that the i-th splitting mode may also be MTT. MTT is not a parallel solution with QT, BT, and TT, but includes a plurality of splitting methods, that is, is a general name of coexistence of QT, BT, and TT. Similar to MTT, QTBT is a parallel solution with QT and BT, QTBT includes a plurality of splitting methods, that is, is a general name of coexistence of QT and BT.

In act 202, a splitting processing is performed on the i-th node according to the i-th splitting mode to obtain an (i+1)-th node.

In an embodiment of the present application, after the decoder obtains the i-th splitting mode corresponding to the i-th node, the decoder may perform a splitting processing on the i-th node according to the i-th splitting mode, thus acquiring the (i+1)-th node.

It should be noted that in implementation of the present application, the decoder performs a splitting processing on the i-th node based on the i-th splitting mode, and each i-th node may be split to obtain at least two leaves, that is, obtain at least two (i+1)-th nodes.

An embodiment of the present application provides a picture decoding method, including: receiving, by a decoder, bitstream data, and parsing the bitstream data to obtain a coding tree unit corresponding to the bitstream data; performing a detection processing on an i-th node of an i-th layer corresponding to the coding tree unit to obtain an i-th detection result, i being an integer greater than 0; acquiring an (i+1)-th node of an (i+1)-th layer corresponding to the coding tree unit according to the i-th detection result; continuing to perform a detection processing on the (i+1)-th node, and traversing all nodes corresponding to the coding tree unit until data of all coding units corresponding to the coding tree unit is obtained; and generating a decoding picture corresponding to the bitstream data according to all nodes and the data of all the coding units. As may be seen, in the embodiment of the present application, in a process of decoding a picture in a video, after receiving the bitstream data and parsing it to obtain the coding tree unit, a detection processing of data detection may be performed on a node of each layer corresponding to the coding tree unit, and then a decoding processing is performed on a node on which there is data to obtain all coding units corresponding to the coding tree unit, so as to obtain a corresponding decoding picture. Since overlapping partitioning between coding units is supported during encoding, if there are at least two coding units with an overlapping region in all coding units obtained by decoding a node on which there is data, the decoder may refresh picture information corresponding to a background coding unit according to picture information corresponding to a refreshing coding unit, thus avoiding excessive partitioning of a video picture, reducing unnecessary header information, avoiding scattered and repeated representation of data with similar characteristics in a same region, and further improving a coding efficiency.

In another embodiment of the present application, a splitting processing when a decoder is decoding a picture is exemplarily explained based on the above embodiments according to the picture decoding method described in the above acts 101 to 105.

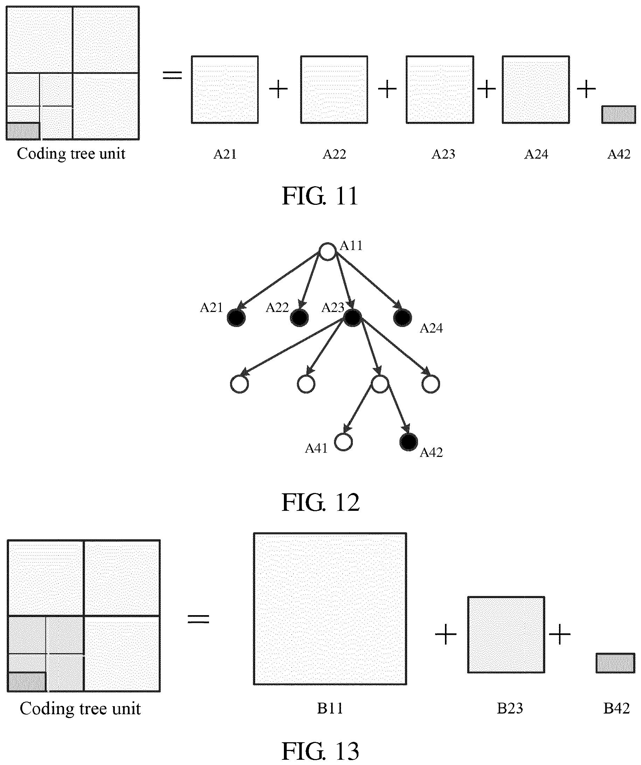

FIG. 11 is a schematic diagram I of a splitting processing; and FIG. 12 is a schematic diagram II of a splitting processing. As shown in FIGs. 11 and 12, after a coding tree unit performs QT splitting on a first node A11 on which there is no data, there is data in obtained upper left coding block A21, upper right coding block A22, lower left coding block A23, and lower right coding block A24, that is, there is data on all four second nodes of a second layer of the coding tree unit. Since A23 may be further split, an encoder may perform QT splitting on A23 to obtain four third nodes of a third layer. There is no data on the four third nodes. Vertical BT splitting may be further performed on one of the third nodes, and after splitting, two fourth nodes of a fourth layer are A41 and A42 respectively, wherein neither of A41 and A42 may be further split, and there is data on A42. As can be seen, according to the picture decoding method of the present application, only A21, A22, A23, A24, and A42 on which there is data need to be decoded to obtain corresponding coding units. Since there is an overlapping region between A42 and A23, the decoder may refresh a coding unit corresponding to A23 according to a coding unit corresponding to A42, and finally obtain a decoding picture corresponding to a coding tree.

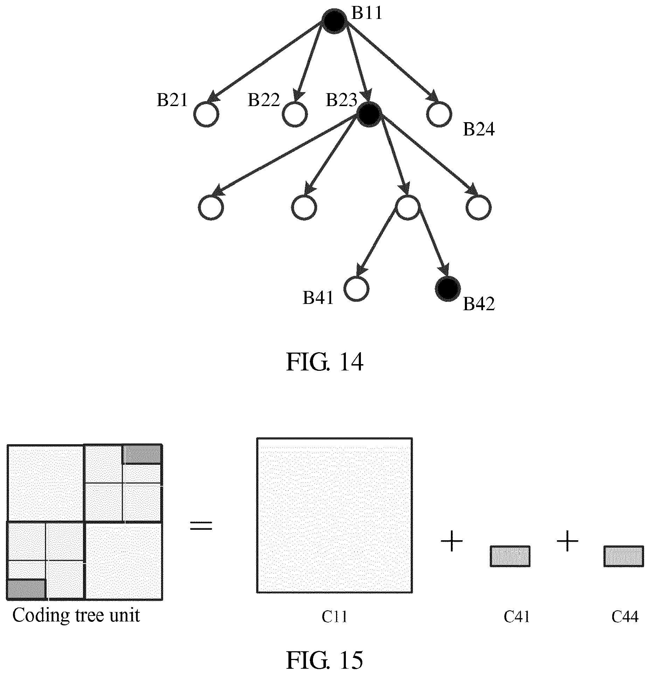

FIG. 13 is a schematic diagram III of a splitting processing; and FIG. 14 is a schematic diagram IV of a splitting processing. As shown in FIGs. 13 and 14, there is data on a first node of a first layer of a coding tree unit, and after QT splitting performed on a first node B 11, data exists in B23 among obtained upper left coding block B21, upper right coding block B22, lower left coding block B23, and lower right coding block B24. Since B23 may be further split, an encoder may perform QT splitting on B23 to obtain four third nodes of a third layer. There is no data on the four third nodes. Vertical BT splitting may be further performed on one of the third nodes, and two fourth nodes of a fourth layer are B41 and B42 respectively after splitting, wherein neither of B41 and B42 may be further split, and there is data on B42. As can be seen, according to the picture decoding method of the present application, only B11, B23, and B42 on which there is data need to be decoded to obtain corresponding coding units. Since there is an overlapping region between B23 and B11, and there is an overlapping region between B23 and B42, a decoder may refresh a coding unit corresponding to B11 according to a coding unit corresponding to B23 to obtain a refreshed coding unit corresponding to B23, then refresh the refreshed coding unit corresponding to B23 according to a coding unit corresponding to B42, and finally obtain a decoding picture corresponding to a coding tree.

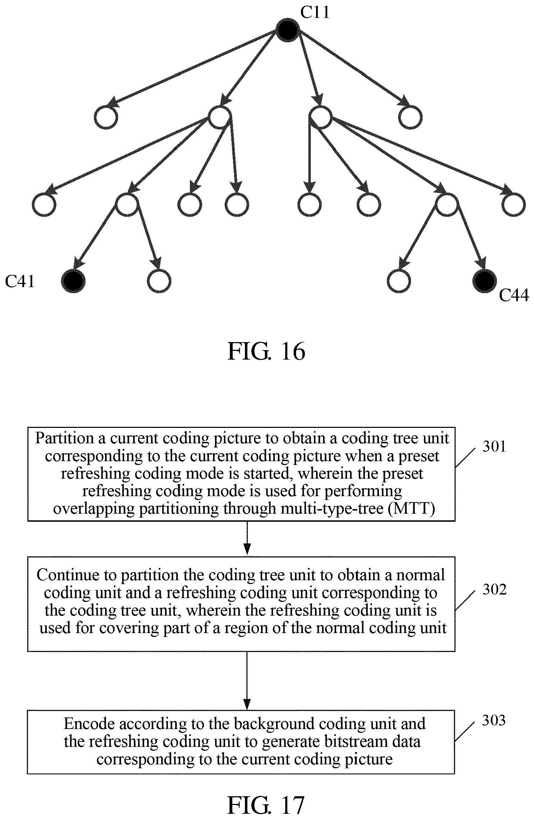

FIG. 15 is a schematic diagram V of a splitting processing; and FIG. 16 is a schematic diagram VI of a splitting processing. As shown in FIGs. 15 and 16, there is data on a first node of a first layer of a coding tree unit, and after QT splitting performed on a first node C11, there is no data in obtained upper left coding block C21, upper right coding block C22, lower left coding block C23, and lower right coding block C24. Since C23 and C23 may be further split, an encoder may perform QT splitting on C22 and C23, respectively, to obtain eight third nodes of a third layer, including four third nodes corresponding to C22 and four third nodes corresponding to C23. There is no data on the eight third nodes. Vertical BT splitting may be further performed on two of the third nodes, and obtained four fourth nodes of a fourth layer are C41, C42, C43, and C44 respectively after splitting, wherein none of C41, C42, C43, and C44 may be further split, and there is data on C41 and C44. As can be seen, according to the picture decoding method of the present application, only C11, C41, and C44 on which there is data need to be decoded to obtain corresponding coding units. Since there is an overlapping region between C41 and C11, and there is an overlapping region between C44 and C11, a decoder may refresh a coding unit corresponding to C11 according to a coding unit corresponding to C41, and at the same time, refresh the coding unit corresponding to C11 according to a coding unit corresponding to C44, and finally obtain a decoding picture corresponding to a coding tree.

An embodiment of the present application provides a picture decoding method, including: receiving, by a decoder, bitstream data, and parsing the bitstream data to obtain a coding tree unit corresponding to the bitstream data; performing a detection processing on an i-th node of an i-th layer corresponding to the coding tree unit to obtain an i-th detection result, i being an integer greater than 0; acquiring an (i+1)-th node of an (i+1)-th layer corresponding to the coding tree unit according to the i-th detection result; continuing to perform a detection processing on the (i+1)-th node, and traversing all nodes corresponding to the coding tree unit until data of all coding units corresponding to the coding tree unit is obtained; and generating a decoding picture corresponding to the bitstream data according to all nodes and the data of all the coding units. As may be seen, in the embodiment of the present application, in a process of decoding a picture in a video, after receiving bitstream data and parsing it to obtain a coding tree unit, a detection processing of data detection may be performed on a node of each layer corresponding to the coding tree unit, and then a decoding processing is performed on a node on which there is data to obtain all coding units corresponding to the coding tree unit, so as to obtain a corresponding decoding picture. Since overlapping partitioning between coding units is supported during encoding, if there are at least two coding units with an overlapping region in all coding units obtained by decoding a node on which there is data, a decoder may refresh picture information corresponding to a background coding unit according to picture information corresponding to a refreshing coding unit, thus avoiding excessive partitioning of a video picture, reducing unnecessary header information, avoiding scattered and repeated representation of data with similar characteristics in a same region, and further improving a coding efficiency.

In another embodiment of the present application, the picture decoding method provided in the above embodiment is provided based on a fact that overlap between coding units is supported when an encoder is encoding a picture. The encoder supports the overlap between coding units when encoding, which may avoid fine partitioning of graphics. Accordingly, when an decoder is decoding a video picture, if there is an overlapping region between background pixel data corresponding to a background coding unit and refreshing pixel data corresponding to a refreshing coding unit in all pixel data, the decoder may replace pixel data of a corresponding region of the background coding unit according to pixel data of the refreshing coding unit, that is, refresh the background coding unit with the refreshing coding unit.

To sum up, FIG. 17 is a schematic diagram of a picture encoding method according to an embodiment of the present application. As shown in FIG. 17, the picture encoding method performed by an encoder may include the following acts.

In act 301, a current coding picture is partitioned to obtain coding tree units corresponding to the current coding picture.

In an embodiment of the present application, the encoder may first partition the current coding picture to obtain the coding tree units corresponding to the current coding picture.

Further, in an embodiment of the present application, when the encoder is encoding a video, it encodes a plurality of frames of pictures in the video frame by frame. At any moment, a frame of picture being encoded may be called a current coding picture. When encoding the current coding picture in the video, the encoder needs to partition the current coding picture into coding tree units of exactly the same size. For example, the encoder may partition the current coding picture to obtain coding tree units of exactly the same size with 64×64 pixels, that is, coding tree units composed of 64×64 pixel points are obtained.

It should be noted that in the embodiment of the present application, the encoder may perform overlapping partitioning on the current coding picture. Specifically, the encoder may perform overlapping partitioning on the current coding picture through multi-type-tree.

It should be noted that in the embodiment of the present application, the encoder may be set to a preset refreshing coding mode and a normal coding mode, respectively. The normal coding mode is a coding mode in which overlap between coding tree units is not allowed and there is no overlap between coding tree units. In contrast, the preset refreshing coding mode is a coding mode in which overlap between coding tree units is allowed. That is, no matter whether it is the preset refreshing coding mode or the normal coding mode, there will be no overlap between the coding tree units.

Further, in an embodiment of the present application, when the encoder is encoding a video, it may select to start the preset refreshing coding mode or the normal coding mode. From an encoding side, the preset refreshing coding mode may be compared with an original method through Rate Distortion Optimization (RDO) for mode selection, and comparison and judgment may be made at different layers. In a process of implementation, a quantity of supported refreshing layers and a quantity of regions may also be flexibly selected.

Further, in an embodiment of the present application, before the encoder partitions the current coding picture to obtain the coding tree units corresponding to the current coding picture, that is, before the act 401, a coding mode may be switched to the preset refreshing coding mode first.

It should be noted that, in the embodiment of the present application, when the encoder partitions the current coding picture, the partitioning of the coding tree units may be performed according to sorting in a raster order, and a plurality of coding tree units may be obtained after the partitioning by the encoder.

Further, in an embodiment of the present application, after the current coding picture is partitioned into the coding tree units, an MTT technique or other split techniques will continue to be used for further partitioning, and finally encoding will be performed in a unit of a coding unit.

In act 302, a coding tree unit is continued to be partitioned to obtain a background coding unit and a refreshing coding unit corresponding to the coding tree unit, wherein the refreshing coding unit is used for covering part of a region of the background coding unit.

In an embodiment of the present application, after the encoder partitions the current coding picture to obtain the coding tree units corresponding to the current coding picture, the encoder may continue to partition a coding tree unit to obtain a background coding unit and a refreshing coding unit corresponding to the coding tree unit. Both the background coding unit and the refreshing coding unit are coding units obtained by further partitioning the coding tree unit and used for picture encoding.

It should be noted that in the embodiment of the present application, the refreshing coding unit may be used for covering part of a region of the background coding unit.

Further, in an embodiment of the present application, after obtaining the coding tree units, the encoder may continue to partition a coding tree unit according to the preset refreshing coding mode, so as to obtain the background coding unit and the refreshing coding unit corresponding to the coding tree unit. Specifically, the encoder may first extract pixel information in the coding tree unit, and then partition the coding tree unit according to the pixel information, so that the coding tree unit may be partitioned into the background coding unit and the refreshing coding unit. That is to say, the encoder may further partition the coding tree unit into the background coding unit and the refreshing coding unit according to the pixel information in the coding tree unit, so as to preform picture encoding according to the background coding unit and the refreshing coding unit. Part of a region of the background coding unit may be covered and refreshed by the refreshing coding unit.

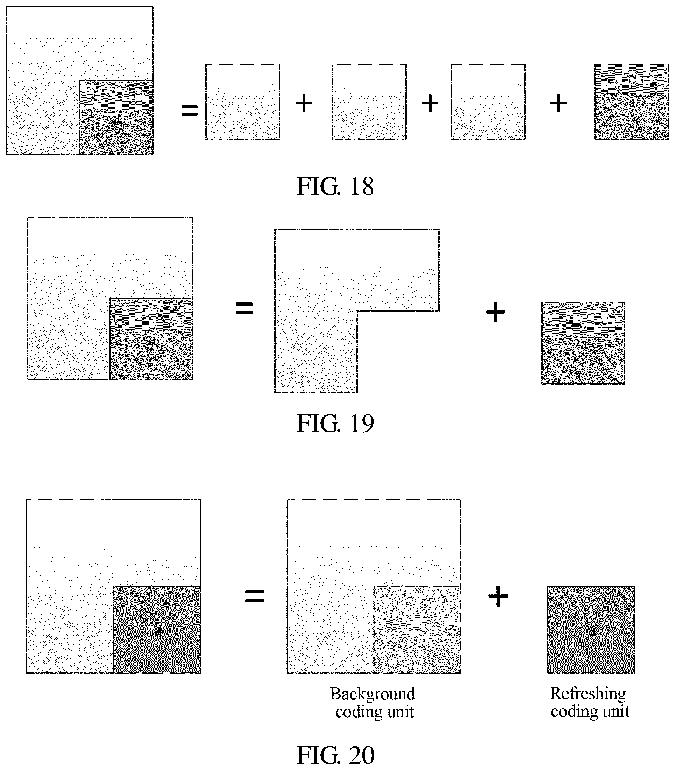

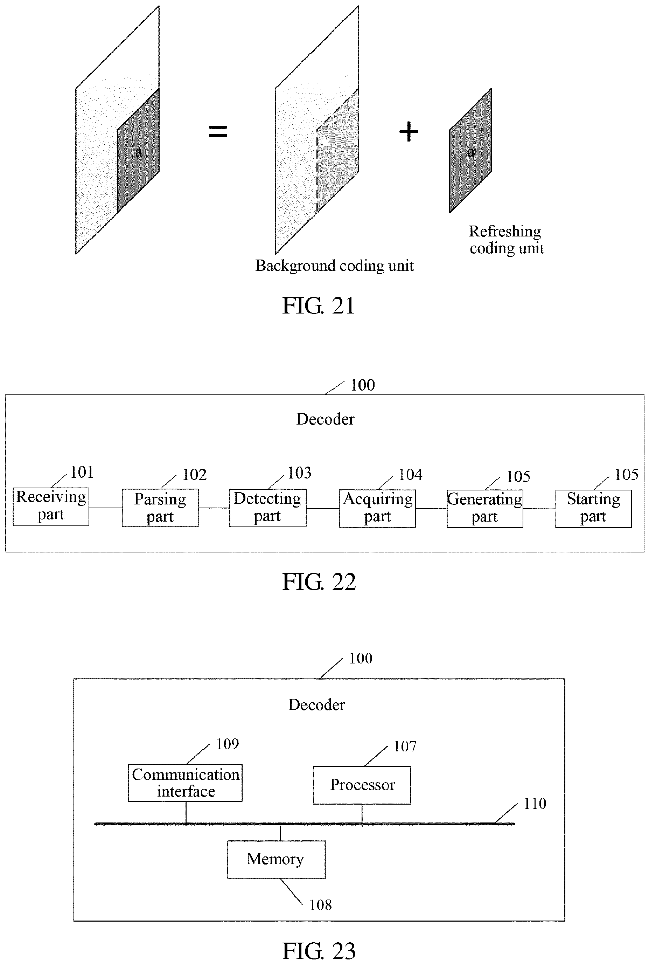

FIG. 18 is a schematic diagram I of non-overlapping partitioning, and FIG. 19 is a schematic diagram II of non-overlapping partitioning. As shown in FIG. 18 and FIG. 19, according to an existing video encoding method, for small regions with different contents from other regions, such as region a that has a different content from other regions, when an encoder partitions a coding tree unit, since overlap between coding units are not allowed, the coding tree units need to be finely split in a manner according to FIG. 18 or FIG. 19 in order to obtain a better effect of video encoding. FIG. 20 is a schematic diagram I of overlapping partitioning, and FIG. 21 is a schematic diagram II of overlapping partitioning. As shown in FIGs. 20 and 21, for the same region a, when the encoder partitions a coding tree unit, since overlap with each other between coding units are allowed, specifically, a coding tree unit may be partitioned into a refreshing coding unit to cover and replace a background coding unit, and then the refreshing coding unit is used for covering and replacing part of a region of the background coding unit, thus avoiding too small block partitioning and effectively reducing an amount of header information.

Furthermore, in an embodiment of the present application, data in a pixel domain needs to be transformed into a frequency domain through Discrete Cosine Transform (DCT) and Discrete SineTransform (DST), and then quantized and encoded for transmission. For example, in a frame of current picture, a flat picture region with less pixel information is mainly composed of low frequency components, so an energy of the flat picture region after transformation is all concentrated in the upper left corner, that is to say, when a picture is encoded and transmitted, values of other regions are basically 0 except for a few values in the upper left corner. In this way, only the few values need to be transmitted, which may represent pixel data of all regions. Accordingly, if n data is required to encode and transmit the flat picture region, the flat picture region is partitioned into four sub-regions and then encoded and transmitted, maybe 4n non-zero data is required to represent the region, thus the same information is repeatedly expresses from an information perspective.

Furthermore, in an embodiment of the present application, for both MTT partitioning and QTBT partitioning, QT partitioning is performed first, and then other types of partitioning are performed on each leaf node of QT.

Further, in an embodiment of the present application, among background coding units and refreshing coding units obtained by partitioning a coding tree unit by an encoder, one background coding unit may be allowed to be refreshed by a plurality of refreshing coding units, and a refreshing coding unit may also be allowed to be refreshed by a refreshing coding unit of a next layer as a background coding unit. That is to say, in the embodiment of the present application, a preset refreshing coding mode may allow multi-region refreshing and multi-layer refreshing.

It should be noted that, in the embodiment of the present application, the method of partitioning the coding tree unit by the encoder to obtain the background coding unit and the refreshing coding unit corresponding to the coding tree unit may specifically include the following acts. In act 302a, the coding tree unit is partitioned to obtain a j-th background coding unit and a j-th refreshing coding unit corresponding to a j-th layer, j being an integer greater than 0.

In an embodiment of the present application, after the encoder partitions the current coding picture to obtain the coding tree units corresponding to the current coding picture, the coding tree units may be partitioned according to MTT, so as to obtain the j-th background coding unit and the j-th refreshing coding unit corresponding to the j-th layer, wherein j is an integer greater than 0.

It should be noted that in implementation of the present application, since the preset refreshing coding mode may allow multi-layer refreshing, at least one layer of coding units may be obtained after the encoder partitions the coding tree unit.

In act 302b, the j-th refreshing coding unit is partitioned to obtain a (j+1)-th background coding unit and a (j+1)-th refreshing coding unit corresponding to a (j+1)-th layer.

In an embodiment of the present application, after the encoder partitions the coding tree unit according to MTT to obtain the j-th background coding unit and the j-th refreshing coding unit corresponding to the j-th layer, the encoder may also continue to partition the j-th refreshing coding unit according to MTT to obtain the (j+1)-th background coding unit and the (j+1)-th refreshing coding unit corresponding to the (j+1)-th layer.

It should be noted that in the implementation of the present application, if there are a plurality of layers of coding units in the coding tree unit, the j-th refreshing coding unit of the j-th layer may continue to be partitioned into the (j+1)-th background coding unit and the (j+1)-th refreshing coding unit corresponding to the (j+1)-th layer. That is, among the background coding units and the refreshing coding units obtained by partitioning the coding tree unit by the encoder, one background coding unit may be allowed to be refreshed by a plurality of refreshing coding units, and a refreshing coding unit may also be allowed to be refreshed by a refreshing coding unit of a next layer as a background coding unit.

In act 303, the coding tree unit is coded according to the background coding unit and the refreshing coding unit to generate bitstream data corresponding to the current coding picture.

In an embodiment of the present application, after the encoder partitions the coding tree unit to obtain the background coding unit and refreshing coding unit corresponding to the coding tree unit, the encoder may encode the current coding picture according to the background coding unit and the refreshing coding unit to generate the bitstream data corresponding to the current coding picture.

Further, in an embodiment of the present application, when the encoder encodes the coding tree unit according to the background coding unit and the refreshing coding unit, the encoder may encode the background coding unit first and then encode the refreshing coding unit. That is, after the encoder encodes the background coding unit to generate background bitstream data, the encoder will then encode the refreshing coding unit to generate refreshing bitstream data.

It should be noted that in the embodiment of the present application, the bitstream data includes background bitstream data and refreshing bitstream data.

Further, in an embodiment of the present application, the encoder may transmit the bitstream data after encoding the current coding picture according to the background coding unit and the refreshing coding unit to generate the bitstream data corresponding to the current coding picture. Specifically, in an embodiment of the present application, when transmitting the bitstream data, the encoder may transmit the background bitstream data first, and then transmit the refreshing bitstream data. That is, when the encoder transmits the bitstream data, the encoder transmits the refreshing bitstream data after transmitting the background bitstream data.

As can be seen, in the embodiment of the present application, when the encoder encodes the coding tree unit according to the preset refreshing coding mode, the encoder first encodes and transmits the large background coding unit, and then encodes and transmits the refreshing coding unit. Accordingly, when decoding, the background coding unit is decoded first, and then the refreshing coding unit is decoded.

Further, the encoding method according to the present application may be understood as a method to achieve irregular shape partitioning. In a process of encoding in a unit of a coding unit, there is no overlap between coding units, but the encoder partitions a coding tree unit into a background coding unit and a refreshing coding unit, wherein part of a region of the background coding unit will be covered by the refreshing coding unit, and an uncovered region is irregular, which is a region that the background coding unit needs to represent, and a covered region belongs to virtual extended data. QTBT may be regarded as a special case of MTT. Therefore, after MTT is introduced into VVC, implementation of a provided method is similar.

Further, in an embodiment of the present application, the encoder and the decoder may also allow an overlapping region between coding units during prediction and/or transformation. Accordingly, a coding tree unit may have a corresponding background prediction unit and a refreshing prediction unit, and may also have a corresponding background transform unit and a refreshing transform unit.

Further, in an embodiment of the present application, the encoder may achieve an irregular region splitting method through block subtraction.

According to the picture encoding method according to the embodiment of the present application, in a process of encoding and decoding a picture in a video, when an encoder splits a coding unit of a current coding picture, a background coding unit and a refreshing coding unit with an overlapping partial region may be obtained through a preset refreshing coding mode, and then encoding is performed. Accordingly, when a decoder decodes a current decoding picture according to a preset refreshing decoding mode, a refreshing coding unit is allowed to refresh in a local region of a background coding unit, thus avoiding excessive partitioning of a video picture, reducing unnecessary header information, and further improving a coding efficiency.

Based on the above embodiments, in yet another embodiment of the present application, FIG. 22 is a schematic diagram I of a structure of a decoder according to an embodiment of the present application. As shown in FIG. 22, a decoder 100 according to an embodiment of the present application may include a receiving part 101, a parsing part 102, a detecting part 103, an acquiring part 104, a generating part 105, and a starting part 106.

The receiving part 101 is configured to receive bitstream data.

The parsing part 102 is configured to parse the bitstream data to obtain a coding tree unit corresponding to the bitstream data.

The detecting part 103 is configured to detect an i-th node of an i-th layer corresponding to the coding tree unit to obtain an i-th detection result, i being an integer greater than 0, and continue to detect an (i+1)-th node until data of all code units corresponding to the coding tree unit is obtained.

The acquiring part 104 is configured to acquire an (i+1)-th node of an (i+1)-th layer corresponding to the coding tree unit according to the i-th detection result, and continue to detect the (i+1)-th node and traverse all nodes corresponding to the coding tree unit until data of all coding units corresponding to the coding tree unit are obtained.

The generating part 105 is configured to generate a decoding picture corresponding to the bitstream data according to all the nodes and the data of all the coding units.

Further, in an embodiment of the present application, the acquiring part 104 is specifically configured to acquire data of an i-th coding unit of the i-th layer when the i-th detection result is that there is data and splitting is performed, and split the i-th node to obtain the (i+1)-th node of the (i+1)-th layer corresponding to the coding tree unit; split the i-th node to obtain the (i+1)-th node of the (i+1)-th layer corresponding to the coding tree unit when the i-th detection result is that there is no data and splitting is not performed; acquire data of an i-th coding unit of the i-th layer and end parsing on the i-th node when the i-th detection result is that there is data and splitting is not performed; and end parsing on the i-th node when the i-th detection result is that there is no data and splitting is not performed.

Further, in an embodiment of the present application, the generating part 105 is specifically configured to decode data of all the coding units based on all the nodes to obtain all pixel data corresponding to the coding tree unit, and generate the decoding picture corresponding to the bitstream data according to all the pixel data.

Further, in an embodiment of the present application, the acquiring part 104 is further specifically configured to acquire an i-th splitting mode corresponding to the i-th node, and splitting the i-th node according to the i-th splitting mode to acquire the (i+1)-th node.

Further, in an embodiment of the present application, the acquiring part 104 is further specifically configured to decode data of the i-th coding unit to acquire i-th pixel data when there is data and splitting is not performed on the i-th node; decode data of the i-th coding unit to obtain i-th background pixel data and decode data of an (i+1)-th coding unit to obtain i-th refreshing pixel data so as to acquire i-th pixel data when there is data and splitting is performed on the i-th node; and traverse all the nodes until all the pixel data is obtained.

Further, in an embodiment of the present application, the generating part 105 is specifically configured to refresh the i-th background pixel data according to the i-th refreshing pixel data when there is data and splitting is performed on the i-th node, so as to obtain i-th pixel data; and traverse all the nodes until the decoding picture is obtained.

Further, in an embodiment of the present application, the generating part 105 is further specifically configured to acquire data of an (i+1)-th coding unit and decode data of the (i+1)-th coding unit to obtain i-th refreshing pixel data corresponding to the i-th node when there is data and splitting is performed on the i-th node; decode data of the i-th coding unit to obtain i-th background pixel data; set the i-th background pixel data as a background of the i-th refreshing pixel data to obtain i-th pixel data; and traverse all the nodes until all the pixel data is obtained.

Further, in an embodiment of the present application, the acquiring part 104 is further specifically configured to set the i-th background pixel data to be empty when there is no data on the i-th node.

Further, in an embodiment of the present application, the generating part 105 is further configured to continue to detect the (i+1)-th node and traverse all nodes corresponding to the coding tree unit until data of all coding units corresponding to the coding tree unit is obtained, and then refresh data of an i-th coding unit according to data of an (i+1)-th coding unit.

Further, in an embodiment of the present application, the starting part 106 is configured to start a preset refreshing mode after the bitstream data is received and parsed to obtain a coding tree unit corresponding to the bitstream data, wherein the preset refreshing mode is used for overlapping decoding among coding units.

FIG. 23 is a schematic diagram II of a structure of a decoder according to an embodiment of the present application. As shown in FIG. 23, a decoder 100 according to an embodiment of the present application may further include a processor 107, a memory 108 configured to store instructions executable by the processor 107, a communication interface 109, and a bus 110 configured to connect the processor 107, the memory 108, and the communication interface 109.

Further, in an embodiment of the present application, the processor 107 is configured to receive bitstream data and parse the bitstream data to obtain a coding tree unit corresponding to the bitstream data; perform a data detection processing on an i-th node of an i-th layer corresponding to the coding tree unit to obtain an i-th detection result, i being an integer greater than 0; acquire an (i+1)-th node of an (i+1)-th layer corresponding to the coding tree unit according to the i-th detection result; continue to perform a data detection processing on the (i+1)-th node and traverse all nodes corresponding to the coding tree unit until data of all coding units corresponding to the coding tree unit is obtained; and generate a decoding picture corresponding to the coding tree unit of the bitstream data according to all the nodes and the data of all the coding units.

In an embodiment of the present application, the processor 107 may be at least one of an Application Specific Integrated Circuit (ASIC), a Digital Signal Processor (DSP), a Digital Signal Processing Device (DSPD), a Programmable Logic Device (PLD), a Field Programmable Gate Array (FPGA), a Central Processing Unit (CPU), a controller, a microcontroller, and a microprocessor. It may be understood that for different devices, electronic devices for implementing the above processor functions may also be other devices, which are not limited specifically in the embodiments of the present application. The memory 108 may be connected with the processor 107. The memory 108 is configured to store executable program codes including computer operation instructions. The memory 108 may include a high-speed RAM memory or a non-volatile memory, for example, at least two disk memories.

In an embodiment of the present application, the bus 110 is used for connecting the communication interface 109, the processor 107, and the memory 108 and intercommunication between these devices.

In an embodiment of the present application, the memory 108 is used for storing instructions and data.

In an actual application, the memory 108 may be a volatile memory, such as a Random Access Memory (RAM), or a non-volatile memory, such as Read Only Memory (ROM), flash memory, a Hard Disk Drive (HDD), or a Solid-State Drive (SSD), or a combination of the above kinds of memories, and provide instructions and data to a processor.

In addition, various functional modules in the embodiments may be integrated into one processing unit, or various units may be physically presented separately, or two or more than two units may be integrated into one unit. The integrated units may be implemented in a form of hardware, or may be implemented in a form of a software functional module.

The integrated units, if implemented in a form of a software functional module and not sold or used as an independent product, may be stored in a computer-readable storage medium. Based on such understanding, the technical solutions of the embodiments, in essence, or part contributing to the prior art, or all or part of the technical solutions, may be embodied in a form of a software product, the computer software product is stored in a storage medium, and includes several instructions for enabling a computer device (which may be a personal computer, a server, or a network device, etc.) or a processor to perform all or part of acts of the methods of the embodiments. The aforementioned storage medium includes various media, such as a U disk, a mobile hard disk, a Read Only Memory (ROM), a Random Access Memory (RAM), a magnetic disk, or an optical disk, which are capable of storing program codes.

An embodiment of the present application provides a picture decoder, which receives bitstream data, and parses the bitstream data to obtain a coding tree unit corresponding to the bitstream data; detects an i-th node of an i-th layer corresponding to the coding tree unit to obtain an i-th detection result, i being an integer greater than 0; acquires an (i+1)-th node of an (i+1)-th layer corresponding to the coding tree unit according to the i-th detection result; continues to detect the (i+1)-th node, and traverses all nodes corresponding to the coding tree unit until data of all coding units corresponding to the coding tree unit is obtained; and generates a decoding picture corresponding to the bitstream data according to all the nodes and the data of all the coding units. As can be seen, in the embodiment of the present application, in a process of decoding a picture in a video, after receiving and parsing bitstream data to obtain a coding tree unit, a node of each layer corresponding to the coding tree unit may be performed a detection processing, and then a node on which there is data is performed a decoding processing to obtain all coding units corresponding to the coding tree unit, so as to obtain a corresponding decoding picture. Since overlapping partitioning between coding units is supported during encoding, if there are at least two coding units with an overlapping region in all coding units obtained by decoding a node on which there is data, a decoder may refresh picture information corresponding to a background coding unit according to picture information corresponding to a refreshing coding unit, thus avoiding excessive partitioning of a video picture, reducing unnecessary header information, avoiding scattered and repeated representation of data with similar characteristics in a same region, and further improving a coding efficiency.

An embodiment of the present application provides a computer-readable storage medium on which a program is stored, when the program is executed by a processor, the method described in the foregoing embodiment is implemented.

Specifically, program instructions corresponding to a picture decoding method in an embodiment may be stored on a storage medium such as an optical disk, a hard disk, and a USB flash disk. When program instructions corresponding to a picture decoding method in a storage medium that are read or executed by an electronic device, the following acts are included: receiving bitstream data and parsing the bitstream data to obtain a coding tree unit corresponding to the bitstream data; performing a data detection processing on an i-th node of an i-th layer corresponding to the coding tree unit to obtain an i-th detection result, i being an integer greater than 0; acquiring an (i+1)-th node of an (i+1)-th layer corresponding to the coding tree unit cording to the i-th detection result; continuing to performing a data detection processing on the (i+1)-th node, and traversing all nodes corresponding to the coding tree unit until data of all coding units corresponding to the coding tree unit is obtained; and generating a decoding picture corresponding to the coding tree unit of the bitstream data according to all the nodes and the data of all the coding units.

It should be understood by a person skilled in the art that the embodiments of the present application may be provided as methods, systems, or computer program products. Therefore, the present application may use a form of a hardware embodiment, a software embodiment, or an embodiment combining software and hardware. Moreover, the present application may use a form of a computer program product implemented on one or more computer usable storage media (including, but not limited to, a magnetic disk memory, an optical memory, etc.) containing computer usable program codes.

The present application is described with reference to implementation flowcharts and/or block diagrams of the methods, devices (systems), and computer program products of the embodiments of the present application. It should be understood that each flow and/or block in the flowcharts and/or the block diagrams, and combinations of flows and/or blocks in the flowcharts and/or the block diagrams may be implemented by computer program instructions. These computer program instructions may be provided to a processor of a general purpose computer, a special purpose computer, an embedded processing machine, or another programmable data processing device to generate a machine, such that an apparatus for implementing functions specified in one or more flows in the implementation flowcharts and/or one or more blocks in the block diagrams is generated through instructions that are executed by a processor of a computer or another programmable data processing device.

These computer program instructions may also be stored in a computer-readable memory that may guide a computer or another programmable data processing device to operate in a particular manner, such that instructions stored in the computer-readable memory generate an article of manufacture including an instruction apparatus, wherein the instruction apparatus implements functions specified in one or more flows in the implementation flowcharts and/or one or more blocks in the block diagrams.

These computer program instructions may also be loaded on a computer or another programmable data processing device to enable a series of operational acts to be performed on a computer or another programmable device to generate a computer-implemented processing, such that instructions executed on the computer or the another programmable device provide acts for implementing functions specified in one or more flows in the implementation flowcharts and/or one or more blocks in the block diagrams.

The above are only preferred embodiments of the present application and are not intended to limit the scope of protection of the present application.

### Industrial Applicability

Embodiments of the present application provide a picture decoding method, a decoder, and a storage medium, wherein the decoder receives bitstream data, and parses the bitstream data to obtain a coding tree unit corresponding to the bitstream data; detects an i-th node of an i-th layer corresponding to the coding tree unit to obtain an i-th detection result, i being an integer greater than 0; acquires an (i+1)-th node of an (i+1)-th layer corresponding to the coding tree unit according to the i-th detection result; continues to detect the (i+1)-th node, and traverses all nodes corresponding to the coding tree unit until data of all coding units corresponding to the coding tree unit is obtained; and generates a decoding picture corresponding to the bitstream data according to all the nodes and the data of all the coding units. As can be seen, in the embodiment of the present application, in a process of decoding a picture in a video, after receiving and parsing bitstream data to obtain a coding tree unit, a node of each layer corresponding to the coding tree unit may be performed a detection processing, and then a node on which there is data is performed a decoding processing to obtain all coding units corresponding to the coding tree unit, so as to obtain a corresponding decoding picture. Since overlapping partitioning between coding units is supported during encoding, if there are at least two coding units with an overlapping region in all coding units obtained by decoding a node on which there is data, a decoder may refresh picture information corresponding to a background coding unit according to picture information corresponding to a refreshing coding unit, thus avoiding excessive partitioning of a video picture, reducing unnecessary header information, avoiding scattered and repeated representation of data with similar characteristics in a same region, and further improving a coding efficiency.

## Claims

1. A picture decoding method, comprising:
receiving bitstream data and parsing the bitstream data to obtain a coding tree unit corresponding to the bitstream data;
detecting an i-th node of an i-th layer corresponding to the coding tree unit to obtain an i-th detection result, i being an integer greater than 0;
acquiring an (i+1)-th node of an (i+1)-th layer corresponding to the coding tree unit according to the i-th detection result;
continuing to detect the (i+1)-th node, and traversing all nodes corresponding to the coding tree unit until data of all coding units corresponding to the coding tree unit is obtained; and
generating a decoding picture corresponding to the bitstream data according to all the nodes and the data of all the coding units.

2. The method according to claim 1, wherein the acquiring the (i+1)-th node of the (i+1)-th layer corresponding to the coding tree unit according to the i-th detection result comprises:
acquiring data of an i-th coding unit of the i-th layer and splitting the i-th node to obtain the (i+1)-th node of the (i+1)-th layer corresponding to the coding tree unit when the i-th detection result is that there is data and splitting is performed;
splitting the i-th node to obtain the (i+1)-th node of the (i+1)-th layer corresponding to the coding tree unit when the i-th detection result is that there is no data and splitting is performed;
acquiring data of an i-th coding unit of the i-th layer and ending parsing on the i-th node when the i-th detection result is that there is data and splitting is not performed; and
ending parsing on the i-th node when the i-th detection result is that there is no data and splitting is not performed.

3. The method according to claim 2, wherein the generating the decoding picture corresponding to the bitstream data according to all the nodes and the data of all the coding units comprises:
decoding data of all the coding units based on all the nodes to obtain all pixel data corresponding to the coding tree unit; and
generating the decoding picture corresponding to the bitstream data according to all the pixel data.

4. The method according to claim 2, wherein the splitting the i-th node to obtain the (i+1)-th node of the (i+1)-th layer corresponding to the coding tree unit comprises:
acquiring an i-th splitting mode corresponding to the i-th node; and
splitting the i-th node according to the i-th splitting mode to obtain the (i+1)-th node.

5. The method according to claim 3, wherein the decoding data of all the coding units based on all the nodes to obtain all pixel data corresponding to the coding tree unit comprises:
decoding the data of the i-th coding unit to obtain i-th pixel data when there is data and splitting is not performed on the i-th node; and
decoding the data of the i-th coding unit to obtain i-th background pixel data and decoding data of an (i+1)-th coding unit to obtain i-th refreshing pixel data to acquire i-th pixel data when there is data and splitting is performed on the i-th node; and traversing all the nodes until all the pixel data is obtained.

6. The method according to claim 5, wherein the generating the decoding picture corresponding to the bitstream data according to all the pixel data comprises:
refreshing the i-th background pixel data according to the i-th refreshing pixel data to obtain i-th pixel data when there is data and splitting is performed on the i-th node; and
traversing all the nodes until the decoding picture is obtained.

7. The method according to claim 3, wherein the decoding the data of all the coding units based on all the nodes to obtain all the pixel data corresponding to the coding tree unit comprises:
acquiring data of an (i+1)-th coding unit and decoding the data of the (i+1)-th coding unit to obtain i-th refreshing pixel data corresponding to the i-th node when there is data and splitting is performed on the i-th node;
decoding the data of the i-th coding unit to obtain i-th background pixel data;
setting the i-th background pixel data as a background of the i-th refreshing pixel data to obtain i-th pixel data; and
traversing all the nodes until all the pixel data is obtained.

8. The method according to any one of claims 5 to 7, wherein the decoding the data of all the coding units based on all the nodes to obtain all the pixel data corresponding to the coding tree unit comprises:
setting the i-th background pixel data to be empty when there is no data on the i-th node.

9. The method according to claim 1, wherein after continuing to detect the (i+1)-th node, and traversing all the nodes corresponding to the coding tree unit until data of all the coding units corresponding to the coding tree unit is obtained, the method further comprises:
refreshing data of an i-th coding unit according to data of an (i+1)-th coding unit.

10. The method according to claim 1, wherein after receiving the bitstream data and parsing the bitstream data to obtain the coding tree unit corresponding to the bitstream data, the method further comprises:
starting a preset refreshing mode, wherein the preset refreshing mode is used for overlapping decoding among coding units.

11. A decoder comprising: a receiving part, a parsing part, a detecting part, an acquiring part, and a generating part, wherein,
the receiving part is configured to receive bitstream data;
the parsing part is configured to parse the bitstream data to obtain a coding tree unit corresponding to the bitstream data;
the detecting part is configured to detect an i-th node of an i-th layer corresponding to the coding tree unit to obtain an i-th detection result, i being an integer greater than 0, and continue to detect an (i+1)-th node until data of all code units corresponding to the coding tree unit is obtained;
the acquiring part is configured to acquire an (i+1)-th node of an (i+1)-th layer corresponding to the coding tree unit according to the i-th detection result, and continue to detect the (i+1)-th node and traverse all nodes corresponding to the coding tree unit until data of all the coding units corresponding to the coding tree unit is obtained; and
the generating part is configured to generate a decoding picture corresponding to the bitstream data according to all the nodes and the data of all the coding units.

12. The decoder according to claim 11, wherein
the acquiring part is specifically configured to acquire data of an i-th coding unit of the i-th layer when the i-th detection result is that there is data and splitting is performed, and split the i-th node to obtain the (i+1)-th node of the (i+1)-th layer corresponding to the coding tree unit; split the i-th node to obtain the (i+1)-th node of the (i+1)-th layer corresponding to the coding tree unit when the i-th detection result is that there is no data and splitting is not performed; acquire data of an i-th coding unit of the i-th layer and end parsing on the i-th node when the i-th detection result is that there is data and splitting is not performed; and end parsing on the i-th node when the i-th detection result is that there is no data and splitting is not performed.

13. The decoder according to claim 12, wherein
the generating part is specifically configured to decode the data of all the coding units based on all the nodes to obtain all pixel data corresponding to the coding tree unit, and generate the decoding picture corresponding to the bitstream data according to all the pixel data.

14. The decoder according to claim 12, wherein
the acquiring part is further specifically configured to acquire an i-th splitting mode corresponding to the i-th node, and splitting the i-th node according to the i-th splitting mode to acquire the (i+1)-th node.

15. The decoder according to claim 13, wherein
the acquiring part is further specifically configured to decode the data of the i-th coding unit to obtain i-th pixel data when there is data and splitting is not performed on the i-th node; decode the data of the i-th coding unit to obtain -th background pixel data and decode data of an (i+1)-th coding unit to obtain i-th refreshing pixel data so as to acquire i-th pixel data when there is data and splitting is performed on the i-th node; and traverse all the nodes until all the pixel data is obtained.

16. The decoder according to claim 15, wherein
the generating part is specifically configured to refresh the i-th background pixel data according to the i-th refreshing pixel data when there is data and splitting is performed on the i-th node, so as to obtain i-th pixel data; and traverse all the nodes until the decoding picture is obtained.

17. The decoder according to claim 13, wherein
the generating part is further specifically configured to acquire data of an (i+1)-th coding unit and decode the data of the (i+1)-th coding unit to obtain i-th refreshing pixel data corresponding to the i-th node when there is data and splitting is performed on the i-th node; decode the data of the i-th coding unit to obtain i-th background pixel data; set the i-th background pixel data as a background of the i-th refreshing pixel data to obtain i-th pixel data; and traverse all the nodes until all the pixel data is obtained.

18. The decoder according to any one of claims 15 to 17, wherein
the acquiring part is further specifically configured to set the i-th background pixel data to be empty when there is no data on the i-th node.

19. The decoder according to claim 11, wherein
the generating part is further configured to continue to detect the (i+1)-th node and traverse all the nodes corresponding to the coding tree unit until data of all the coding units corresponding to the coding tree unit is obtained, and then refresh data of an i-th coding unit according to data of an (i+1)-th coding unit.

20. The decoder according to claim 11, wherein the decoder further comprises a starting part, wherein
the starting part is configured to start a preset refreshing mode after the bitstream data is received and parsed to obtain the coding tree unit corresponding to the bitstream data, wherein the preset refreshing mode is used for overlapping decoding among coding units.

21. A decoder, comprising a processor, a memory configured to store instructions executable by the processor, a communication interface, and a bus configured to connect the processor, the memory, and the communication interface, wherein when the instructions are executed by the processor, the method according to any one of claims 1 to 10 is implemented.

22. A computer-readable storage medium, on which a program applied to a decoder is stored, wherein when the program is executed by a processor, the method according to any one of claims 1 to 10 is implemented.
